Europäisches Patentamt

European Patent Office

Office européen des brevets

(11) Veröffentlichungsnummer: **0 139 830**
**A2**

(12) # EUROPÄISCHE PATENTANMELDUNG

(21) Anmeldenummer: 84106678.0

(22) Anmeldetag: 12.06.84

(51) Int. Cl.⁴: **C 08 G 18/80**
**C 08 G 18/79, C 08 G 18/42**
**C 09 D 3/72**

(30) Priorität: 04.08.83 DE 3328131

(43) Veröffentlichungstag der Anmeldung:
08.05.85 Patentblatt 85/19

(84) Benannte Vertragsstaaten:
AT BE CH DE FR GB IT LI NL SE

(71) Anmelder: CHEMISCHE WERKE HÜLS AG
- RSP Patente / PB 15 - Postfach 13 20
D-4370 Marl 1(DE)

(72) Erfinder: Gras, Rainer, Dr.
Im Ostholz 49 a
D-4630 Bochum 5(DE)

(72) Erfinder: Riemer, Heinz, Dr.
Fritz-Reuter-Strasse 15
D-4250 Bottrop 2(DE)

(54) Pulverlacke auf der Basis teilblockierter IPDI-Isocyanurate und hydroxylgruppenhaltiger Polyester sowie ein Verfahren zur Herstellung matter Überzüge.

(57) Die Erfindung betrifft lagerstabile Pulverlacke auf der Basis von hydroxylgruppenhaltigen Polyestern mit einem Schmelzpunkt über 130°C, teilweise mit ε-Caprolactam blockierten IPDI-Isocyanuraten mit einem Schmelzpunkt über 130°C und einem freien NCO-Gehalt zwischen 2 und 8 Gewichtsprozent sowie sonstigen Zusätzen, die nach Aushärtung matte Überzüge ergeben.

EP 0 139 830 A2

<u>Pulverlacke auf der Basis teilblockierter IPDI-Isocyanurate und hydroxylgruppenhaltiger Polyester sowie ein Verfahren zur Herstellung matter Überzüge</u>

Seit geraumer Zeit gibt es ein zunehmendes Interesse an Pulverlacken, die eine matte Oberfläche ergeben. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffekts kleinere oder größere Mengen Füllstoffe, wie z. B. Kreide, feinverteiltes Siliciumdioxid, Bariumsulfat, oder unverträgliche Zusatzstoffe, wie Wachse, Cellulosederivate, beizumischen. Diese Zusätze bewirken jedoch eine Verschlechterung der lacktechnischen Filmeigenschaften.

Mit Beginn der 70er Jahre setzte eine Entwicklung von Pulverlacken ein, in deren Folge unterschiedliche Reaktivitäten zur Einstellung des Matteffekts benutzt wurden.

Aus der niederländischen Anmeldung 68 06 930 ist bekannt, daß ein Mattierungseffekt dadurch erhalten wird, daß man das Epoxidharz gleichzeitig mit Sulfaminsäure und wenigstens 2 % Trimellithsäureanhydrid aushärtet.

Die DE-OS 21 47 653 beschreibt ein Lackpulvergemisch mit Matteffekt, das durch mechanisches Mischen von wenigstens zwei Lackpulvern unterschiedlicher Epoxidharz/Härter-Systeme mit voneinander abweichendem Schmelzbereich hergestellt wird.

Auch das Verfahren der DE-OS 22 47 779 geht von einem Gemisch zweier Lackpulver aus, die sich durch die An- bzw. Abwesenheit eines Härtungsbeschleunigers unterscheiden.

In der DE-PS 23 24 696 wird ein Verfahren zur Herstellung von Überzügen auf Epoxidharzbasis mit matter Oberfläche vorgestellt, bei dem ein Spezialhärter - das Salz von cyclischen Amidinen mit bestimmten Polycarbonsäuren - zum Einsatz kommt. Tatsächlich hat sich aufgrund seiner hervorragenden lacktechnischen Eigenschaften nur dieses Verfahren auf dem Markt durchsetzen können; der Verfahrensablauf wurde inzwischen verbessert (vgl. DE-OS 30 26 455).

Zur Herstellung von Überzügen, die weitgehende Wetterstabilität und Lichtechtheit aufweisen sollen, eignen sich die aufgeführten Epoxidharzsysteme indessen nicht. Für diese Einsatzgebiete kommen vor allem Pulverlacke auf Polyesterbasis und $\varepsilon$-Caprolactam blockierter aliphatischer Polyisocyanate infrage.

So beschreibt beispielsweise die DE-OS 21 05 777 pulverförmige Überzugsmittel, die aus hydroxylgruppenhaltigen Polyestern und aus $\varepsilon$-Caprolactam blockiertem Isophorondiisocyanat (IPDI) oder dessen Addukten mit Polyolen bestehen.

Die DE-OS 29 29 150 beschreibt pulverförmige Überzugsmassen auf der Basis von zwischen 40 bis 120 °C schmelzenden hydroxylgruppenhaltigen Polyestern und teilweise mit $\varepsilon$-Caprolactam blockierten IPDI-Addukten. Als geeignete IPDI-Addukte werden neben den Reaktionsprodukten mit Polyolen und Wasser unter anderem auch das trimerisierte IPDI allein oder im Gemisch mit monomerem IPDI aufgeführt.

Wie aus den Beispielen hervorgeht, ergeben die Pulverlacke, die mit $\varepsilon$-Caprolactam blockierten IPDI-Derivaten gehärtet werden, stets Überzüge mit glänzender Oberfläche.

Ziel der vorliegenden Erfindung war es nun, Pulverlacke auf der Basis von Polyestern und mit $\varepsilon$-Caprolactam blockierten Polyisocyanaten zu entwickeln, die beim Aushärten eine matte Oberfläche ergeben.

Es wurden jetzt die in den Ansprüchen 1 bis 5 aufgeführten Pulverlackgemische, bestehend aus Polyestern, teilweise mit $\varepsilon$-Caprolactam blockierten IPDI-Isocyanuraten und gegebenenfalls in der PUR-Chemie üblichen Zusätzen gefunden. Überraschend ist, daß man trotz des Einsatzes von teilweise blockiertem monomerfreien IPDI-Isocyanurat mit einem Schmelzpunkt über 130 $^{\circ}$C, insbesondere über 140 $^{\circ}$C, Überzüge mit guten Verlaufseigenschaften erhält, da damit die aus dem Stand der Technik bekannte Obergrenze von 120 $^{\circ}$C deutlich überschritten wird (vgl. EP-OS 0 009 694, Seite 2, Zeile 29, bis Seite 3, Zeile 3). Es war nicht vorhersehbar, daß die in Anspruch 1 angegebene Pulverlackmischung Überzüge mit matter Oberfläche ergeben würde.

Gegenstand dieser Erfindung ist auch ein Verfahren zur Herstellung matter Überzüge.

Die erfindungsgemäß zu verwendenden hydroxylgruppenhaltigen Polyester werden in an sich bekannter Weise durch Umsetzung von Polycarbonsäuren, ihrer Anhydride oder ihrer Methylester mit Diolen und/oder Polyolen erhalten, wobei durch geeignete Wahl des COOH/OH-Verhältnisses Hydroxylzahlen der Polyester zwischen 10 und 200, bevorzugt zwischen 20 und 100 mg KOH/g erreicht werden.

Üblicherweise geht man von cyclischen Polycarbonsäuren, insbesondere aromatischen Di- und Tricarbonsäuren, wie Phthalsäure, Isophthalsäure, Terephthalsäure, Benzol-1,3,5-tricarbonsäure, Trimellithsäureanhydrid oder Dimethylterephthalat (DMT), aus. Bezogen auf die Gesamtmenge der Säuren können bis zu 20 Gewichtsprozent auch durch aliphatische Polycarbonsäuren mit 4 bis 14 C-Atomen ersetzt sein. Beispiele hierfür sind Adipinsäure, 2,2,4- und/oder 2,4,4-Trimethyladipinsäure, Sebacinsäure und Dodecandisäure.

Die zur Veresterung geeigneten Diole umfassen Alkylen- und Cycloalkylendiole mit 2 bis 8 C-Atomen, die durch Alkylgruppen substituiert sein können, wie z. B. Neopentylglykol und 1,4-Bishydroxymethylcyclohexan.

Als Polyole kommen mehrfunktionelle Alkohole mit bis zu 12 C-Atomen infrage, wie z. B. Glycerin, Hexantriol-1,2,6, Pentaerythrit, Trimethylolpropan und Trimethylolethan.

Die Erweichungstemperaturen der Polyester müssen so niedrig liegen, daß sie sich bei Temperaturen zwischen 70 und 120 $^{o}$C mit den bei der Herstellung der Überzüge verwendeten Zusätze verarbeiten lassen.

Die erfindungemäßen partiell blockierten IPDI-Isocyanurate werden üblicherweise dadurch hergestellt, daß man IPDI in Gegenwart eines geeigneten Katalysatorsystems trimerisiert und die dann noch verbleibenden NCO-Gruppen teilweise mit $\varepsilon$-Caprolactam blockiert. Die erste Reaktionsstufe, die katalytische Trimerisierung, liefert kein einheitliches Produkt. Vielmehr erhält man Oligomere des IPDI, die mindestens einen Isocyanuratring und 3 freie NCO-Gruppen enthalten und die hier - der Einfachheit halber - als IPDI-Isocyanurate bezeichnet werden.

Besonders geeignet für die Trimerisierung von IPDI ist das in der DE-OS 26 44 684 beschriebene Katalysatorsystem aus 1,4-Diazabicyclo-(2,2,2),-octan und Propylenoxid-1,2. Die Trimerisierung kann in Substanz oder in inerten organischen Lösungsmitteln vorgenommen werden. Zur Durchführung des Trimerisierungsverfahrens ist es wesentlich, die Reaktion bei einem bestimmten NCO-Gehalt der Mischung abzubrechen und zwar vorzugsweise dann, wenn 30 bis 50 % der NCO-Gruppen unter Trimerisierung reagiert haben. Das nicht umgesetzte IPDI wird dann durch Dünnschichtdestillation vom Isocaynurat abgetrennt.

Reines IPDI hat einen NCO-Gehalt von 37, 8 %. Der theoretische NCO-Wert des trimerisierten IPDI ist 18, 9 %, in praxi liegt er bei 17 bis 18 %.

Bei der anschließenden Blockierung, die an sich bekannt ist (vgl. DE-OS 29 29 150), wird das Blockierungsreagenz Ɛ-Caprolactam zweckmäßigerweise in einer solchen Menge eingesetzt, daß auf ein freies NCO-Äquivalent 0, 4 bis 0, 8, vorzugsweise 0, 5 bis 0, 7 NH-Äquivalente des Ɛ-Caprolactams kommen.

Der Polyester und das als Härter eingesetzte pratiell blockierte IPDI-Isocyanurat werden in solchen Mengenverhältnisses gemischt, daß im Pulverlack auf ein OH-Äquivalent des Polyesters 0, 5 bis 1, 3, vorzugsweise 0, 9 bis 1, 1 freie und mit Ɛ-Caprolactam blockierte NCO-Äquivalente kommen.

Zu den beschriebenen Bindemittelkombinationen werden noch Verlaufmittel in Mengen von 0, 1 bis 1 Gewichtsteil, vorzugsweise 0, 3 bis 0, 7 Gewichtsteile, üblicherweise als Polyacrylsäureester, pro 100 Gewichtsteile Bindemittel zugesetzt. Weitere Zusätze umfassen typischerweise Füllstoffe, wie z. B. mikronisierte Kreide (z. B. DURCAL® 5 der Fa. Omya, Köln), Pigmente, wie z. B. Titandioxid, und Beschleuniger, wie z. B. der in Beispiel 4.1 angegebene Katalysator-Masterbatch.

Als Katalysatoren werden vorzugsweise Zinnverbindungen, wie z. B. Di-n-butylzinndilaurat, eingesetzt. Ihre Menge beträgt – bezogen auf das Bindemittel 0,01 bis 1, vorzugsweise 0,1 bis 0,5 Gewichtsprozent.

Mit den erfindungsgemäßen Pulverlacken lassen sich Überzüge mit matter Oberfläche herstellen.

Auch durch die Verwendung von Harzen und Härtern mit unterschiedlichen Schmelzpunkten sowie durch den unterschiedlichen freien NCO-Gehalt läßt sich der Mattierungsgrad beeinflussen. Schließlich wirkt sich auch der Zusatz der beschriebenen Katalysatoren auf den Glanzgrad aus.

Die Herstellung der Pulverlacke erfolgt beispielsweise in der Weise, daß man die einzelnen Komponenten (Polyester, blockierte IPDI-Isocyanurate und die für Pulverlacke üblichen Zusätze) mahlt, sofern dies erforderlich erscheint, mischt und bei 90 bis 130 $^{\circ}$C, vorzugsweise bei 100 bis 120 $^{\circ}$C, extrudiert.

Das abgekühlte Extrudat wird auf eine Korngröße kleiner als 100 µm gemahlen. Anschließend werden gegebenenfalls die größeren Fraktionen durch Siebung entfernt und zur Mühle zurückgeführt.

Die Applikation des Pulverlacks auf die zu überziehenden Substrate kann nach bekannten Methoden erfolgen, z. B. durch elektrostatisches Pulververspritzen, Wirbelsintern oder elektrostatisches Wirbelsintern. Anschließend werden die lackierten Gegenstände 35 bis 6 Minuten im Temperaturbereich zwischen 170 bis 220 $^{\circ}$C, vorzugsweise 25 bis 8 Minuten zwischen 180 bis 200 $^{\circ}$C, ausgehärtet.

Zur Beschichtung mit den erfindungsgemäßen pulverförmigen Überzugsmitteln eignen sich alle Substrate, die die angegebenen Härtungstemperaturen vertragen, z. B. Metalle, Glas, Keramik oder Kunststoff.

Die so hergestellten Pulverbeschichtungen zeichnen sich durch sehr gute lacktechnische Eigenschaften aus.

1. Herstellung des IPDI-Isocyanurats

Beispiel 1.1

1 000 Gewichtsteile IPDI wurden mit 5 Gewichtsteilen Trimerisierungskatalysator (Mischung aus 1,4-Diazabicyclo-(2,2,2)-octan und Propylenoxid-1,2 im Gewichtsverhältnis 1 : 2) drei Stunden auf 120 $^{\circ}$C erhitzt, wobei der NCO-Gehalt des Einsatzprodukts von 37,8 % auf 28 % fiel. Das Reaktionsgemisch wurde zur Abtrennung des monomeren IPDI einer Dünnschichtdestillation bei 150 bis 160 $^{\circ}$C und 0,1 mbar unterworfen. Das Produkt wies folgende Eigenschaften auf:

NCO-Gehalt     : 17,4 Gewichtsprozent
Monomergehalt  : <0,7 Gewichtsprozent
Schmelzbereich : 100 - 105 $^{\circ}$C

2. Blockierung der IPDI-Isocyanurate

Beispiel 2.1

Zu 1 000 Gewichtsteilen IPDI-Isocyanurat wurden bei 130 bis 140 $^{\circ}$C in einem Kneter 234,4 Gewichtsteile $\varepsilon$-Caprolactam zugesetzt. Zur Vervollständigung der Reaktion mußte das Reaktionsgemisch noch eine Stunde bei 130 $^{\circ}$C gehalten werden.

NCO frei                              : 6,8 Gewichtsprozent
NCO blockiert                         : 7,1 Gewichtsprozent
Schmelzbereich                        : 133 - 141 $^{\circ}$C
Glasumwandlungstemperatur (DTA): 90 - 105 $^{\circ}$C

**Beispiel 2. 2**

Zu 486, 3 Gewichtsteilen IPDI-Isocyanurat und 0, 6 Gewichtsteilen Di-n-butylzinndilaurat, gelöst in 400 Gewichtsteilen wasserfreiem Aceton, gab man bei 60 bis 70 $^{o}$C portionsweise 113, 7 Gewichtsteile $\epsilon$-Caprolactam. Anschließend wurde das Reaktionsprodukt drei bis fünf Stunden bei 70 $^{o}$C gehalten, das Lösemittel abdestilliert und der Rückstand bei 80 bis 90 $^{o}$C und 1 mbar getrocknet.

NCO frei                                   : 6, 6 Gewichtsprozent

NCO blockiert                              : 7, 1 Gewichtsprozent

Schmelzbereich                            : 143 - 145 $^{o}$C

Glasumwandlungstemperatur (DTA): 98 - 115 $^{o}$C

**Beispiel 2. 3**

1-000 Gewichtsteile IPDI-Isocyanurat wurden mit 304, 9 Gewichtsteilen $\epsilon$-Caprolactam gemäß Beispiel 2. 1 zur Reaktion gebracht.

NCO frei                                   : 4, 5 Gewichtsprozent

NCO blockiert                              : 8, 5 Gewichtsprozent

Schmelzbereich                            : 138 - 148 $^{o}$C

Glasumwandlungstemperatur (DTA) :   96 - 111 $^{o}$C

**Beispiel 2. 4**

1 000 Gewichtsteile IPDI-Isocyanurat wurden mit 351, 7 Gewichtsteilen $\epsilon$-Caprolactam gemäß Beispiel 2. 1 zur Reaktion gebracht.

NCO frei                                   : 3, 1 Gewichtsprozent

NCO blockiert                              : 9, 6 Gewichtsprozent

Schmelzbereich                            : 140 - 150 $^{o}$C

Glasumwandlungstemperatur (DTA): 110 - 119 $^{o}$C

## Vergleichsbeispiel A

1 000 Gewichtsteile IPDI-Isocyanurat wurden mit 187,6 Gewichtsteilen $\epsilon$-Caprolactam gemäß Beispiel 2.1 zur Reaktion gebracht.

NCO frei                                : 8,6 Gewichtsprozent

NCO blockiert                           : 5,9 Gewichtsprozent

Schmelzbereich                          : 121 - 128 $^{\circ}$C

Glasumwandlungstemperatur (DTA) :  88 -  99 $^{\circ}$C

## Vergleichsbeispiel B

1 000 Gewichtsteile IPDI-Isocyanurat wurden mit 469 Gewichtsteilen $\epsilon$-Caprolactam gemäß Beispiel 2.1 zur Reaktion gebracht.

NCO frei                                : <0,5 Gewichtsprozent

NCO blockiert                           : 11,6 Gewichtsprozent

Schmelzbereich                          : 145 - 160 $^{\circ}$C

Glasumwandlungstemperatur (DTA) : 110 - 125 $^{\circ}$C

## 3. Herstellung der Polyester

Die Ausgangskomponenten - Terephthalsäure (Ts), Dimethylterephthalat (DMT), Hexandiol-1,6 (IID), Neopentylglykol (NPG), 1,4-Dimethylolcyclohexan (DMC) und Trimethylolpropan (TMP) - wurden in einen Reaktor gegeben und mit Hilfe eines Ölbades erwärmt. Nachdem die Stoffe zum größten Teil aufgeschmolzen waren, wurden bei einer Temperatur von 160 $^{\circ}$C 0,05 Gewichtsprozent Di-n-butylzinn-oxid als Katalysator zugesetzt. Die erste Methanolabspaltung trat bei einer Temperatur von ca. 170 $^{\circ}$C auf. Innerhalb von sechs bis acht Stunden wurde die Temperatur auf 220 $^{\circ}$C bis 230 $^{\circ}$C erhöht und innerhalb weiterer 12 bis 15 Stunden die Reaktion zu Ende geführt. Der Polyester wurde auf 200 $^{\circ}$C abgekühlt und durch Anlegen von Vakuum (1,3 mbar) innerhalb von 30 bis 45 Minuten weitgehend von flüchtigen Anteilen befreit. Während der gesamten Reaktionszeit wurde das Sumpfprodukt gerührt und ein schwacher $N_2$-Strom durch das Reaktionsgemisch geleitet.

Die Tabelle 1 gibt die Zusammensetzungen und die entsprechenden physikalischen und chemischen Kenndaten der eingesetzten Polyester an.

Tabelle 1

Zusammensetzung und Eigenschaften der Polyester

|  | Beispiel 3.1 | Beispiel 3.2 | Beispiel 3.3 |
|---|---|---|---|
| Komponenten der Polyester |  |  |  |
| Ts (Mol) | 9 | 10 | 12 |
| DMT (Mol) | 9 | 10 | 12 |
| HD (Mol) | 3 | 6,25 | 6,75 |
| NPG (Mol) | 13 | 10,5 | 11,5 |
| DMC (Mol) | 3 | 2 | 5 |
| TMP (Mol) | 1 | 2,9 | 3 |
| Chemische und physikalische Kenndaten |  |  |  |
| OH-Zahl (mg KOH/g) | 50 - 56 | 55 - 60 | 56 - 61 |
| Säurezahl (mg KOH/g) | 3 - 4 | 3 - 4 | 3 - 4 |
| Schmelzpunkt ($^o$C) | ca. 70 | ca. 75 | ca. 80 |
| Glasumwandlungstemperatur (DTA, $^o$C) | ca. 50 | ca. 50 | ca. 55 |
| Viskosität bei 160 $^o$C (mPa·s) | 10 000 | 25 000 | 16 000 |

4. Pulverlacke

Allgemeine Herstellungsvorschrift:

Die gemahlenen Produkte, Härter, Polyester, Verlaufmittel-Masterbatch[*] und/oder Katalysator-Masterbatch[**] werden gegebenenfalls mit Weißpigment und Füllstoffen in einem Kollergang innig gemischt und anschließend im Extruder bei 100 bis 130 $^{\circ}$C homogenisiert. Nach dem Erkalten wird das Extrudat gebrochen und mit einer Stiftmühle auf eine Korngröße von weniger als 100 µm gemahlen. Das so hergestellte Pulver wird mit einer elektrostatischen Pulverspritzanlage bei 60 kV auf entfettete, gegebenenfalls vorbehandelte, Eisenbleche appliziert und in einem Umlufttrockenschrank bei Temperaturen zwischen 180 und 200 $^{\circ}$C eingebrannt.

\* Verlaufmittel-Masterbatch

Es werden 10 Gewichtsprozent des Verlaufmittels - ein handelsübliches Copolymeres von Butylacrylat und 2-Ethylhexylacrylat - in dem entsprechenden Polyester in der Schmelze homogenisiert und nach dem Erstarren zerkleinert.

\*\* Katalysator-Masterbatch

Es werden 5 Gewichtsprozent des Katalysators, hier Di-n-butylzinndilaurat, in dem entsprechenden Polyester in der Schmelze homogenisiert und nach dem Erstarren zerkleinert.

Die Abkürzungen in den folgenden Tabellen bedeuten:

SD        = Schichtdicke in µm

HK        = Härte nach König in sec (DIN 53 157)

HB        = Härte nach Buchholz (DIN 53 153)

ET        = Tiefung nach Erichsen in mm (DIN 53 156)

GS        = Gitterschnittprüfung (DIN 53 151)

GG 60 $^{\circ}$    = Messung des Glanzes nach Gardner (ASTM-D 523) Imp. rev. = Impact reverse in inch·lb $\hat{=}$ 11,52 g·m

Beispiel 4.1

Entsprechend der allgemeinen Arbeitsvorschrift unter 4. wurde ein Pulverlack mit folgender Rezeptur hergestellt, appliziert und zwischen 180 und 200 $^{\circ}$C eingebrannt:

0139830

407,4 Gewichtsteile Polyester gemäß Beispiel 3.1

142,6 Gewichtsteile Härter gemäß Beispiel 2.1

400,0 Gewichtsteile Weißpigment (TiO$_2$)

50,0 Gewichtsteile Verlaufmittel-Masterbatch

| Einbrennbe-dingungen | Mechanische Kenndaten | | | | | | |
|---|---|---|---|---|---|---|---|
| Zeit/Temp. min/$^o$C | SD | HK | HB | ET | GS | Imp. rev. | GG 60 $^o$ |
| 8 /200 | 60 - 75 | 184 | 100 | 4,1 - 4,8 | 0 | 20 | 55 |
| 10 /200 | 70 | 187 | 111 | 5,2 - 5,5 | 0 | 40 | 57 |
| 12 /200 | 70 - 85 | 188 | 100 | 5,4 - 5,7 | 0 | 50 | 56 |
| 15 /180 | 70 - 80 | 185 | 111 | 4,1 - 4,3 | 0 | 20 | 58 |
| 20 /180 | 60 - 80 | 189 | 111 | 4,4 - 4,9 | 0 | 30 | 57 |
| 25 /180 | 75 - 95 | 190 | 100 | 4,7 - 5,0 | 0 | 30 | 56 |

Beispiel 4.2

(Analog zu Beispiel 4.1)

405,6 Gewichtsteile Polyester gemäß Beispiel 3.2

144,4 Gewichtsteile Härter gemäß Beispiel 2.1

400,0 Gewichtsteile Weißpigment (TiO$_2$)

50,0 Gewichtsteile Verlaufmittel-Masterbatch

| Einbrennbe-dingungen | Mechanische Kenndaten | | | | | | |
|---|---|---|---|---|---|---|---|
| Zeit/Temp. min/$^o$C | SD | HK | HB | ET | GS | Imp. rev. | GG 60 $^o$ |
| 8 /200 | 70 - 80 | 178 | 111 | 2,7 - 3,9 | 0 | 10 | 10 |
| 10 /200 | 85 | 180 | 100 | 3,3 - 4,6 | 0 | 20 | 12 |
| 12 /200 | 80 - 95 | 182 | 111 | 3,6 - 4,8 | 0 | 30 | 12 |
| 15 /180 | 80 - 90 | 181 | 100 | 2,4 - 3,5 | 0 | 10 | 13 |
| 20 /180 | 70 - 95 | 180 | 111 | 3,1 - 4,0 | 0 | 20 | 14 |
| 25 /180 | 75 - 90 | 183 | 111 | 3,8 - 4,4 | 0 | 30 | 11 |

Beispiel 4.3

(Analog zu Beispiel 4.1)

308,6 Gewichtsteile Polyester gemäß Beispiel 3.1

141,4 Gewichtsteile Härter gemäß Beispiel 2.1

400,0 Gewichtsteile Weißpigment ($TiO_2$)

 50,0 Gewichtsteile Verlaufmittel-Masterbatch

100,0 Gewichtsteile Katalysator-Masterbatch

| Einbrennbe-dingungen | Mechanische Kenndaten | | | | | | |
|---|---|---|---|---|---|---|---|
| Zeit/Temp. min /$^{o}$C | SD | HK | HB | ET | GS | Imp. rev. | GG 60 $^{o}$ |
| 8 /200 | 70 - 95 | 178 | 111 | 2,9 - 3,5 | 0 | 10 | 30 |
| 10 /200 | 80 - 95 | 182 | 111 | 3,3 - 4,1 | 0 | 10 | 32 |
| 12 /200 | 90 | 182 | 125 | 3,6 - 4,4 | 0 | 30 | 32 |
| 15 /180 | 70 - 90 | 184 | 100 | 2,5 - 2,9 | 0 | <10 | 33 |
| 20 /180 | 70 - 90 | 183 | 111 | 3,4 - 3,7 | 0 | 20 | 31 |
| 25 /180 | 80 - 95 | 180 | 111 | 4,1 - 4,4 | 0 | 20 | 34 |

Beispiel 4.4

(Analog zu Beispiel 4.1)

445,5 Gewichtsteile Polyester gemäß Beispiel 3.1

154,5 Gewichtsteile Härter gemäß Beispiel 2.1

350,0 Gewichtsteile Weißpigment ($TiO_2$)

 50,0 Gewichtsteile Verlaufmittel-Masterbatch

| Einbrennbe-dingungen | Mechanische Kenndaten | | | | | | |
|---|---|---|---|---|---|---|---|
| Zeit/Temp. min/$^{\circ}$C | SD | HK | HB | ET | GS | Imp. rev. | GG 60 $^{\circ}$ |
| 8 /200 | 70 - 90 | 180 | 100 | 5,3 - 5,7 | 0 | 30 | 60 |
| 10 /200 | 60 - 80 | 183 | 111 | 5,4 - 5,9 | 0 | 50 | 60 |
| 12 /200 | 65 - 90 | 182 | 111 | 5,8 - 6,7 | 0 | 50 | 58 |
| 15 /180 | 70 - 80 | 186 | 111 | 4,4 - 4,9 | 0 | 10 | 57 |
| 20 /180 | 70 - 80 | 184 | 111 | 5,1 - 5,6 | 0 | 30 | 59 |
| 25 /180 | 80 - 95 | 184 | 111 | 5,7 - 5,9 | 0 | 40 | 60 |

Beispiel 4.5

(Analog zu Beispiel 4.1)

443,5 Gewichtsteile Polyester gemäß Beispiel 3.2

156,5 Gewichtsteile Härter gemäß Beispiel 2.1

350,0 Gewichtsteile Weißpigment ($TiO_2$)

50,0 Gewichtsteile Verlaufmittel-Masterbatch

| Einbrennbe-dingungen | Mechanische Kenndaten | | | | | | |
|---|---|---|---|---|---|---|---|
| Zeit/Temp. min/$^{\circ}$C | SD | HK | HB | ET | GS | Imp. rev. | GG 60 $^{\circ}$ |
| 8 /200 | 60 - 80 | 180 | 100 | 3,0 - 3,9 | 0 | 10 | 15 |
| 10 /200 | 70 - 80 | 179 | 111 | 3,6 - 4,7 | 0 | 20 | 18 |
| 12 /200 | 70 - 90 | 184 | 100 | 4,4 - 5,2 | 0 | 40 | 16 |
| 15 /180 | 65 - 90 | 182 | 111 | 2,8 - 3,4 | 0 | 10 | 14 |
| 20 /180 | 70 - 80 | 182 | 111 | 3,6 - 4,0 | 0 | 20 | 14 |
| 25 /180 | 70 - 95 | 184 | 111 | 4,2 - 4,9 | 0 | 30 | 15 |

Beispiel 4.6

(Analog zu Beispiel 4.1)

404,7 Gewichtsteile Polyester gemäß Beispiel 3.3

145,3 Gewichtsteile Härter gemäß Beispiel 2.1

400,0 Gewichtsteile Weißpigment ($TiO_2$)

 50,0 Gewichtsteile Verlaufmittel-Masterbatch

| Einbrennbe-dingungen | Mechanische Kenndaten | | | | | | |
|---|---|---|---|---|---|---|---|
| Zeit/Temp. min/$^\circ$C | SD | HK | HB | ET | GS | Imp. rev. | GG 60 $^\circ$ |
| 8  /200 | 70 - 90 | 179 | 100 | 4,1 - 4,9 | 0 | 10 | 30 |
| 10  /200 | 60 - 80 | 181 | 100 | 4,9 - 5,7 | 0 | 30 | 33 |
| 12  /200 | 70 - 80 | 178 | 111 | 5,4 - 5,8 | 0 | 50 | 29 |
| 15  /180 | 75 - 95 | 178 | 111 | 3,9 - 4,4 | 0 | 10 | 32 |
| 20  /180 | 70 - 90 | 180 | 100 | 4,2 - 4,7 | 0 | 20 | 32 |
| 25  /180 | 70 - 85 | 183 | 111 | 4,6 - 5,1 | 0 | 50 | 34 |

Beispiel 4.7

(Analog zu Beispiel 4.1)

305,9 Gewichtsteile Polyester gemäß Beispiel 3.3

144,1 Gewichtsteile Härter gemäß Beispiel 2.1

400,0 Gewichtsteile Weißpigment ($TiO_2$)

 50,0 Gewichtsteile Verlaufmittel-Masterbatch

100,0 Gewichtsteile Katalysator-Masterbatch

| Einbrennbe-dingungen | Mechanische Kenndaten | | | | | | |
|---|---|---|---|---|---|---|---|
| Zeit/Temp. min /°C | SD | HK | HB | ET | GS | Imp. rev. | GG 60° |
| 8 /200 | 60 - 80 | 178 | 100 | 3,7 - 3,9 | 0 | 10 | 30 |
| 10 /200 | 70 - 90 | 180 | 100 | 3,5 - 4,4 | 0 | 20 | 32 |
| 12 /200 | 70 - 85 | 179 | 100 | 4,2 - 4,6 | 0 | 20 | 29 |
| 15 /180 | 70 - 95 | 177 | 100 | 3,2 - 3,6 | 0 | 20 | 29 |
| 20 /180 | 65 - 85 | 179 | 111 | 3,7 - 4,0 | 0 | 20 | 32 |
| 25 /180 | 70 - 80 | 178 | 100 | 4,2 - 4,5 | 0 | 30 | 30 |

## Beispiel 4.8

(Analog zu Beispiel 4.1)

405,9 Gewichtsteile Polyester gemäß Beispiel 3.1

144,1 Gewichtsteile Härter gemäß Beispiel 2.2

400,0 Gewichtsteile Weißpigment (TiO$_2$)

50,0 Gewichtsteile Verlaufmittel-Masterbatch

| Einbrennbe-dingungen | Mechanische Kenndaten | | | | | | |
|---|---|---|---|---|---|---|---|
| Zeit/Temp. min /°C | SD | HK | HB | ET | GS | Imp. rev. | GG 60° |
| 8 /200 | 70 - 90 | 180 | 100 | 3,7 - 4,0 | 0 | 10 | 51 |
| 10 /200 | 70 - 85 | 182 | 100 | 4,4 - 4,9 | 0 | 30 | 56 |
| 12 /200 | 60 - 80 | 179 | 111 | 5,1 - 5,3 | 0 | 40 | 53 |
| 15 /180 | 70 - 80 | 181 | 111 | 3,8 - 4,0 | 0 | 10 | 52 |
| 20 /180 | 60 - 85 | 181 | 111 | 4,0 - 4,3 | 0 | 20 | 52 |
| 25 /180 | 75 - 90 | 178 | 125 | 4,4 - 5,0 | 0 | 30 | 54 |

Beispiel 4.9

(Analog zu Beispiel 4.1)

404 Gewichtsteile Polyester gemäß Beispiel 3.2

146 Gewichtsteile Härter gemäß Beispiel 2.2

400 Gewichtsteile Weißpigment ($TiO_2$)

50 Gewichtsteile Verlaufmittel-Masterbatch

| Einbrennbe-dingungen | Mechanische Kenndaten | | | | | | |
|---|---|---|---|---|---|---|---|
| Zeit/Temp. min/°C | SD | HK | HB | ET | GS | Imp. rev. | GG 60 °⅃ |
| 8 /200 | 80 - 95 | 176 | 100 | 2,2 - 3,1 | 0 | 10 | 9 |
| 10 /200 | 80 -100 | 178 | 111 | 2,8 - 3,8 | 0 | 20 | 11 |
| 12 /200 | 70 - 95 | 175 | 111 | 3,7 - 4,5 | 0 | 20 | 10 |
| 15 /180 | 70 - 80 | 180 | 100 | 2,0 - 3,0 | 0 | ‹10 | 12 |
| 20 /180 | 70 - 85 | 177 | 100 | 2,8 - 3,8 | 0 | 20 | 10 |
| 25 /180 | 80 - 90 | 179 | 111 | 3,4 - 4,1 | 0 | 20 | 10 |

Beispiel 4.10

(Analog zu Beispiel 4.1)

400,1 Gewichtsteile Polyester gemäß Beispiel 3.1

149,9 Gewichtsteile Härter gemäß Beispiel 2.3

400,0 Gewichtsteile Weißpigment ($TiO_2$)

50,0 Gewichtsteile Verlaufmittel-Masterbatch

| Einbrennbe-dingungen | Mechanische Kenndaten | | | | | | |
|---|---|---|---|---|---|---|---|
| Zeit/Temp. min/$^{o}$C | SD | HK | HB | ET | GS | Imp. rev. | GG 60$^{o}$ |
| 8 /200 | 70 - 80 | 180 | 100 | 4,6 - 5,1 | 0 | 30 | 64 |
| 10 /200 | 80 | 183 | 111 | 5,7 - 6,0 | 0 | 50 | 60 |
| 12 /200 | 65 - 85 | 180 | 100 | 6,1 - 6,3 | 0 | 60 | 62 |
| 15 /180 | 60 - 75 | 179 | 100 | 4,7 - 4,9 | 0 | 30 | 63 |
| 20 /180 | 70 - 80 | 184 | 100 | 4,8 - 5,3 | 0 | 40 | 61 |
| 25 /180 | 70 - 80 | 183 | 111 | 5,4 - 6,0 | 0 | 60 | 64 |

Beispiel 4.11

(Analog zu Beispiel 4.1)

398,2 Gewichtsteile Polyester gemäß Beispiel 3.2

151,8 Gewichtsteile Härter gemäß Beispiel 2.3

400,0 Gewichtsteile Weißpigment ($TiO_2$)

50,0 Gewichtsteile Verlaufmittel-Masterbatch

| Einbrennbe-dingungen | Mechanische Kenndaten | | | | | | |
|---|---|---|---|---|---|---|---|
| Zeit/Temp. min/$^{o}$C | SD | HK | HB | ET | GS | Imp. rev. | GG 60$^{o}$ |
| 8 /200 | 70 - 80 | 185 | 100 | 3,0 - 3,9 | 0 | 20 | 25 |
| 10 /200 | 60 - 80 | 187 | 100 | 3,6 - 4,9 | 0 | 40 | 27 |
| 12 /200 | 60 - 70 | 182 | 100 | 4,1 - 5,1 | 0 | 50 | 22 |
| 15 /180 | 70 - 80 | 186 | 100 | 2,7 - 3,8 | 0 | 10 | 24 |
| 20 /180 | 70 - 80 | 180 | 100 | 2,9 - 3,7 | 0 | 30 | 26 |
| 25 /180 | 75 | 183 | 111 | 3,6 - 4,8 | 0 | 50 | 28 |

0139830

Beispiel 4.12

(Analog zu Beispiel 4.1)

397,2 Gewichtsteile Polyester gemäß Beispiel 3.3

152,8 Gewichtsteile Härter gemäß Beispiel 2.3

400,0 Gewichtsteile Weißpigment (TiO$_2$)

50,0 Gewichtsteile Verlaufmittel-Masterbatch

| Einbrenne-dingungen | Mechanische Kenndaten | | | | | | |
|---|---|---|---|---|---|---|---|
| Zeit/Temp. min /$^o$C | SD | HK | HB | ET | GS | Imp. rev. | GG 60 $^o$ |
| 8 /200 | 60 - 85 | 180 | 100 | 4,4 - 5,1 | 0 | 20 | 50 |
| 10 /200 | 65 - 95 | 177 | 100 | 3,8 - 4,9 | 0 | 40 | 54 |
| 12 /200 | 70 - 95 | 181 | 100 | 5,2 - 6,0 | 0 | 50 | 53 |
| 15 /180 | 80 - 95 | 176 | 100 | 3,9 - 4,5 | 0 | 20 | 52 |
| 20 /180 | 70 - 85 | 180 | 100 | 4,2 - 4,9 | 0 | 40 | 50 |
| 25 /180 | 70 - 90 | 175 | 100 | 4,6 - 5,7 | 0 | 40 | 55 |

Beispiel 4.13

(Analog zu Beispiel 4.1)

397,4 Gewichtsteile Polyester gemäß Beispiel 3.1

152,6 Gewichtsteile Härter gemäß Beispiel 2.4

400,0 Gewichtsteile Weißpigment (TiO$_2$)

50,0 Gewichtsteile Verlaufmittel-Masterbatch

| Einbrennbedingungen | Mechanische Kenndaten | | | | | | |
|---|---|---|---|---|---|---|---|
| Zeit/Temp. min/°C | SD | HK | HB | ET | GS | Imp. rev. | GG 60° |
| 8 /200 | 60 - 70 | 183 | 100 | 5,7 - 6,8 | 0 | >82 | 72 |
| 10 /200 | 60 - 80 | 180 | 100 | 6,3 - 7,0 | 0 | 70 | 72 |
| 12 /200 | 60 - 70 | 178 | 100 | 8,3 - 8,5 | 0 | 70 | 70 |
| 15 /180 | 50 - 70 | 185 | 100 | 6,5 - 7,7 | 0 | 50 | 70 |
| 20 /180 | 60 - 80 | 188 | 111 | 6,6 - 7,3 | 0 | 40 | 72 |
| 25 /180 | 70 | 184 | 100 | 7,7 - 8,3 | 0 | 70 | 74 |

Beispiel 4.14

(Analog zu Beispiel 4.1)

395,5 Gewichtsteile Polyester gemäß Beispiel 3.2

154,5 Gewichtsteile Härter gemäß Beispiel 2.4

400,0 Gewichtsteile Weißpigment ($TiO_2$)

50,0 Gewichtsteile Verlaufmittel-Masterbatch

| Einbrennbedingungen | Mechanische Kenndaten | | | | | | |
|---|---|---|---|---|---|---|---|
| Zeit/Temp. min/°C | SD | HK | HB | ET | GS | Imp. rev. | GG 60° |
| 8 /200 | 70 - 90 | 179 | 100 | 3,4 - 4,0 | 0 | 20 | 50 |
| 10 /200 | 80 - 90 | 186 | 111 | 3,6 - 4,8 | 0 | 40 | 54 |
| 12 /200 | 70 - 80 | 182 | 100 | 4,4 - 5,5 | 0 | 40 | 53 |
| 15 /180 | 60 - 90 | 180 | 111 | 3,0 - 3,8 | 0 | 10 | 56 |
| 20 /180 | 70 - 90 | 188 | 111 | 3,4 - 4,0 | 0 | 40 | 52 |
| 25 /180 | 80 - 95 | 184 | 100 | 3,8 - 4,8 | 0 | 30 | 54 |

**0139830**

### Vergleichsbeispiel C

(Analog zu Beispiel 4.1)

412 Gewichtsteile Polyester gemäß Beispiel 3.1

138 Gewichtsteile Härter gemäß Vergleichsbeispiel A

400 Gewichtsteile Weißpigment ($TiO_2$)

50 Gewichtsteile Verlaufmittel-Masterbatch

| Einbrennbe-dingungen | Mechanische Kenndaten | | | | | | |
|---|---|---|---|---|---|---|---|
| Zeit/Temp. min/$^oC$ | SD | HK | HB | ET | GS | Imp. rev. | GG 60 $^o$ |
| 8  /200 | 70 - 90 | 120 | 91 | 1,1 - 2,2 | 0 | <10 | 5 |
| 10  /200 | 80 | 118 | 100 | 1,4 - 2,4 | 0 | <10 | 2 |
| 12  /200 | 80 | 150 | 100 | 2,2 - 2,5 | 0 | 10 | 4 |
| 15  /180 | 70 - 90 | 130 | 100 | 0,8 - 1,7 | 0 | <10 | 6 |
| 20  /180 | 60 - 90 | 131 | 91 | 1,2 - 1,9 | 0 | <10 | 1 |
| 25  /180 | 75 - 95 | 126 | 100 | 0,8 - 2,1 | 0 | 10 | 4 |

### Vergleichsbeispiel D

(Analog zu Beispiel 4.1)

386,9 Gewichtsteile Polyester gemäß Beispiel 3.1

163,1 Gewichtsteile Härter gemäß Vergleichsbeispiel B

400,0 Gewichtsteile Weißpigment ($TiO_2$)

50,0 Gewichtsteile Verlaufmittel-Masterbatch

| Einbrennbedingungen | Mechanische Kenndaten | | | | | | |
|---|---|---|---|---|---|---|---|
| Zeit/Temp. min/°C | SD | HK | HB | ET | GS | Imp. rev. | GG 60° |
| 8 /200 | 60 - 80 | 190 | 111 | 5,8 - 8,3 | 0 | 20 | 75 |
| 10 /200 | 70 - 90 | 195 | 111 | 7,5 - 9,1 | 0 | 50 | 79 |
| 12 /200 | 65 - 85 | 193 | 111 | 7,2 - 8,9 | 0 | 40 | 76 |
| 15 /180 | 70 - 90 | 192 | 111 | 4,9 - 6,1 | 0 | 30 | 80 |
| 20 /180 | 60 - 80 | 196 | 100 | 5,7 - 7,2 | 0 | 20 | 79 |
| 25 /180 | 70 - 85 | 191 | 111 | 6,4 - 8,1 | 0 | 50 | 82 |

Vergleichsbeispiel E

(Analog zu Beispiel 4.1)

420 Gewichtsteile Polyester 3353[*]

130 Gewichtsteile Härter B 1530[*]

200 Gewichtsteile Weißpigment (TiO$_2$)

50 Gewichtsteile Verlaufmittel-Masterbatch

200 Gewichtsteile DURCAL® 5[**]

[*] Hersteller: Chemische Werke Hüls AG, Marl

[**] Hersteller: Fa. Omya, Köln

| Einbrennbedingungen | Mechanische Kenndaten | | | | | | |
|---|---|---|---|---|---|---|---|
| Zeit/Temp. min/°C | SD | HK | HB | ET | GS | Imp. rev. | GG 60° |
| 8 /200 | 60 - 80 | 180 | 100 | 6,4 - 6,8 | 0 | 20 | 56 |
| 10 /200 | 70 - 90 | 178 | 111 | 6,9 - 7,2 | 0 | 40 | 58 |
| 12 /200 | 60 - 70 | 182 | 111 | 7,0 - 7,5 | 0 | 70 | 57 |
| 15 /180 | 70 - 80 | 179 | 100 | 6,2 - 6,6 | 0 | 30 | 55 |
| 20 /180 | 80 | 176 | 111 | 6,8 - 7,1 | 0 | 50 | 59 |
| 25 /180 | 60 - 80 | 181 | 100 | 6,8 - 7,7 | 0 | 50 | 57 |

## Vergleichsbeispiel F

(Analog zu Beispiel 4.1)

420 Gewichtsteile Polyester 3353[*]

130 Gewichtsteile Härter B 1530[*]

150 Gewichtsteile Weißpigment ($TiO_2$)

 50 Gewichtsteile Verlaufmittel-Masterbatch

250 Gewichtsteile DURCAL® 5[**]

[*] Hersteller: Chemische Werke Hüls AG, Marl

[**] Hersteller: Fa. Omya, Köln

| Einbrennbe-dingungen | Mechanische Kenndaten | | | | | | |
|---|---|---|---|---|---|---|---|
| Zeit/Temp. min/$^{\circ}$C | SD | HK | HB | ET | GS | Imp. rev. | GG 60 $^{\circ}$ |
| 8  /200 | 70 - 80 | 182 | 100 | 6,2 - 6,5 | 0 | 10 | 44 |
| 10  /200 | 60 - 70 | 178 | 111 | 6,4 - 7,0 | 0 | 30 | 46 |
| 12  /200 | 60 - 70 | 181 | 111 | 6,7 - 7,2 | 0 | 50 | 43 |
| 15  /180 | 70 - 85 | 181 | 100 | 5,9 - 6,2 | 0 | 10 | 45 |
| 20  /180 | 80 | 177 | 111 | 6,0 - 6,7 | 0 | 20 | 45 |
| 25  /180 | 70 - 80 | 182 | 111 | 6,4 - 7,0 | 0 | 40 | 46 |

**0139830**

Patentansprüche:

1. Lagerstabile Pulverlacke mit einer Korngröße kleiner als 100 µm, die nach Aushärtung bei 170 bis 220 $^{\circ}$C matte Überzüge ergeben, auf der Basis eines Stoffgemisches aus

   - hydroxylgruppenhaltigen Polyestern,
   - blockierten Polyisocyanaten sowie
   - sonstigen Zusätzen,

   dadurch gekennzeichnet,
   daß man als blockierte Polyisocyanate teilweise mit $\mathcal{E}$-Caprolactam blockierte IPDI-Isocyanurate mit einem Schmelzpunkt über 130 $^{\circ}$C und einem freien NCO-Gehalt zwischen 2 und 8, vorzugsweise zwischen 3 und 7 Gewichtsprozent einsetzt.

2. Lagerstabile Pulverlacke gemäß Anspruch 1,
   dadurch gekennzeichnet,
   daß man partiell blockierte IPDI-Isocyanurate einsetzt, die durch Umsetzung von IPDI-Isocyanuraten mit $\mathcal{E}$-Caprolactam im NCO/NH-Verhältnis von 1 : x mit 0, 4 < x < 0, 9, vorzugsweise 0, 5 < x < 0, 8, erhalten werden.

3. Lagerstabile Pulverlacke nach Anspruch 1 oder 2,
   dadurch gekennzeichnet,
   daß man als Polyester die Reaktionsprodukte einsetzt, die man durch Umsetzung von Terephthalsäure und/oder Dimethylterephthalat mit Hexandiol-1, 6, Neopentylglykol, 1, 4-Dimethylolcyclohexan und Trimethylolpropan erhält.

4. Lagerstabile Pulverlacke gemäß Anspruch 3,

dadurch gekennzeichnet,

daß man Polyester mit Hydroxylzahlen zwischen 10 und 200, vorzugsweise zwischen 20 und 100, einsetzt.

5. Lagerstabile Pulverlacke nach den Ansprüchen 1 bis 4,

dadurch gekennzeichnet,

daß Polyester und teilweise blockierte IPDI-Isocyanurate im OH/NCO-Verhältnis von x : 1 mit $0,8 > x > 1,2$, vorzugsweise $0,9 > x > 1,1$, eingesetzt werden.

6. Lagerstabile Pulverlacke nach den Ansprüchen 1 bis 5,

dadurch gekennzeichnet,

daß sie, bezogen auf das Bindemittel, 0,01 bis 1 Gewichtsprozent, vorzugsweise 0,1 bis 0,6 Gewichtsprozent, Di-n-butylzinndilaurat enthalten.

7. Verfahren zur Herstellung von Überzügen mit matter Oberfläche,

dadurch gekennzeichnet,

daß man den Pulverlack gemäß den Ansprüchen 1 bis 6 in einem Extruder bei einer Temperatur von 90 bis 130 $^{\circ}$C, vorzugsweise bei 100 bis 120 $^{\circ}$C, extrudiert, auf die zu lackierenden Gegenstände appliziert und innerhalb von 35 bis 6 Minuten bei 170 bis 220 $^{\circ}$C, vorzugsweise innerhalb von 25 bis 8 Minuten bei 180 bis 200 $^{\circ}$C, aushärtet.